(19) **Europäisches Patentamt**
**European Patent Office**
**Office européen des brevets**

(11) **EP 2 059 903 B1**

(12) **FASCICULE DE BREVET EUROPEEN**

(45) Date de publication et mention
de la délivrance du brevet:
**25.06.2014 Bulletin 2014/26**

(51) Int Cl.:
***G06T 7/00*** *(2006.01)*

(21) Numéro de dépôt: **07803243.0**

(22) Date de dépôt: **05.09.2007**

(86) Numéro de dépôt international:
**PCT/EP2007/059280**

(87) Numéro de publication internationale:
**WO 2008/028924 (13.03.2008 Gazette 2008/11)**

(54) **PROCEDE ET OUTIL DE CONFIGURATION D'AU MOINS UN SYSTEME DE VIDEOSURVEILLANCE INTELLIGENTE**

**VERFAHREN UND WERKZEUG ZUM KONFIGURIEREN MINDESTENS EINES INTELLIGENTEN VIDEOÜBERWACHUNGSSYSTEMS**

**METHOD AND TOOL FOR CONFIGURING AT LEAST ONE INTELLIGENT VIDEO-SURVEILLANCE SYSTEM**

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **08.09.2006 FR 0653633**

(43) Date de publication de la demande:
**20.05.2009 Bulletin 2009/21**

(73) Titulaire: **Digital Barriers SAS**
**06560 Valbonne (FR)**

(72) Inventeur: **BRACONIER, Gael**
**F-06220 Vallauris (FR)**

(74) Mandataire: **Arrowsmith, Peter Michael E.**
**Cleveland**
**10 Fetter Lane**
**London EC4A 1BR (GB)**

(56) Documents cités:
**EP-A- 1 094 668        WO-A-2006/057147**
**WO-A1-2006/022184      FR-A1- 2 875 038**
**JP-A- 2001 245 326      JP-A- 2004 200 819**
**US-A1- 2009 021 580**

## Description

La présente invention concerne un procédé et un outil de configuration d'au moins un système de vidéosurveillance intelligente.

Dans l'état de la technique, on connaît des systèmes de vidéosurveillance intelligente qui sont constitués par une ou plusieurs caméras de prise de séquences vidéos d'une scène et qui transmettent le signal vidéo qu'elles captent à un ordinateur qui exécute une analyse de la scène de façon à en extraire, en fonction d'événements prédéterminés, des signaux et autres informations d'alarme.

Particulièrement, de tels systèmes de vidéosurveillance intelligente permettent de détecter l'intrusion d'un véhicule ou d'un individu dans une zone réservée. La détection d'une telle intrusion déclenche alors, au moyen d'outils adaptés constitués par l'ordinateur d'analyse de scènes, l'émission de signaux et autres informations d'alarme.

Cependant, la diffusion de telles techniques de surveillance est freinée notamment par l'existence d'un nombre élevé de fausses alarmes qui correspondent à une mauvaise interprétation des événements prédéterminés quand ils sont reconnus par l'ordinateur d'analyse de scène.

Pour diminuer fortement ce nombre de fausses alarmes, dans l'état de la technique, on a déjà envisagé des groupes de deux caméras pour réaliser une opération de reconstruction de scène 3D par un procédé de stéréovision. L'invention n'utilise pas les procédés de stéréovision.

Dans l'état de la technique on a aussi décrit l'utilisation d'une seule caméra, réputée produire une image 2D, pour reconstituer ensuite une scène 3D à l'aide de méthodes dérivées de la géométrie projective. Malheureusement, l'utilisation de telles méthodes exige la gestion d'un modèle de caméra qui doit être adapté à la scène surveillée, et aussi adapté au reste de la chaîne d'analyse de vision. Une telle adaptation est passée littéralement sur une opération de calibrage de caméra. Une telle opération présente un certain nombre de difficultés en ce que particulièrement elle exige le recours à un opérateur qualifié. Dans le cas d'un système de vidéosurveillance intelligente, surtout si de nombreuses scènes doivent être surveillées, la répétition des opérations de calibrage entraîne un coût d'exploitation et une période d'indisponibilité que la présente invention cherche à réduire.

Particulièrement, la présente invention propose un moyen pour porter remède à cet inconvénient de l'état de la technique. Le moyen de l'invention concerne un outil de configuration de caméras et d'autres sources d'images à l'aide duquel on exécute une opération de configuration d'au moins un système de vidéosurveillance intelligente.

Selon l'invention, la configuration d'un système de vidéosurveillance intelligente exige essentiellement :

- une opération de préparation du système de vidéosurveillance intelligente ; et
- une opération de programmation des événements à détecter lors de l'exploitation du système de vidéosurveillance intelligente.

La préparation du système de vidéosurveillance intelligente comporte elle-même deux opérations successives qui sont :

-- une opération de calibrage ; et
-- une opération de modélisation, exécutée si l'opération de calibrage a été exécutée avec succès.

Dans l'état de la technique, l'opération de calibrage d'une caméra de scènes en trois dimensions "3D" est une opération connue. Essentiellement, l'opération de calibrage d'une caméra consiste à produire un modèle mathématique de formation de l'image depuis la scène qui se déroule dans un espace géométrique réel jusqu'à l'écran de visualisation et le cas échéant, jusqu'à l'outil d'analyse qui permet de réaliser l'interprétation d'événements prédéterminés.

Particulièrement, la modélisation de la caméra est le plus souvent réalisée sous une forme matricielle, par exemple en prenant une caméra dotée d'une optique non déformante, avec un facteur de grandissement ou de réduction déterminé.

Il existe trois catégories de tels outils :

• Les outils de calibrage de caméra 3D qui utilisent des objets de calibrage 3D, particulièrement des parallélépipèdes ;
• Les outils de calibrage de caméra 3D qui utilisent des points de référence ; et
• les outils d'autocalibrage.

Cependant de tels outils nécessitent de calculer un modèle de la caméra par exemple sous forme d'une caméra projective, dans le cas d'une analyse en vision "naturelle" et leur mise en oeuvre est délicate. Cette mise en oeuvre exige de réaliser des opérations manuelles difficiles et qui sont exécutables seulement par un personnel entraîné. Particulièrement, on se reportera aux documents WO-A-2006/022184, WO-A-2006/009192, ou encore WO-A-2005/053321.

Par ailleurs, l'opération de calibrage de la caméra ou des caméras n'est pas toujours adaptée à d'autres sources qu'une caméra déterminée, dont le type et les caractéristiques sont limités au type de l'opération de calibrage qui est envisagée. L'invention présente l'avantage de s'adapter à d'autres sources d'images qu'une caméra d'un seul type déterminé, mais aussi à des images disponibles sur un réseau téléinformatique comme le réseau Internet. Dans un exemple de réalisation les images sont produites par un ensemble de caméras de vidéosurveillance connectées au réseau Internet à des adresses Internet déterminées, constituant un réseau de vidéosurveillance. Dans un exemple de réalisation, les images sont extraites de bases de données d'images fixes ou en séquences.

De plus, la seule opération de calibrage de la source d'images s'est avérée insuffisante pour permettre de mettre en oeuvre de manière sûre un système de vidéosurveillance intelligente, en recourant à un personnel non hautement qualifié en matière de traitement d'images, et une opération de modélisation qui sera définie plus loin s'est avérée nécessaire pour apporter la pleine force au développement de l'invention.

Pour atteindre ces différents buts, l'invention concerne un procédé et un outil de configuration dont la mise en oeuvre soit assez simple pour qu'ils soient exécutés dès que la qualité de l'interprétation de la scène exécutée par un outil d'interprétation de scène devient insuffisante, par exemple parce que le décor de la scène a changé, ou encore parce que l'orientation ou certains paramètres de l'optique de la caméra ont changés.

En effet, la présente invention concerne un procédé de configuration d'au moins un système de vidéosurveillance intelligente sur la base d'un modèle de calibrage d'au moins une caméra de vidéosurveillance, comprenant une opération de préparation du système de vidéosurveillance intelligente, qui comporte elle-même deux operations successives qui sont une opération de calibrage et une opération de modélisation, et une opération de programmation des événements à détecter lors de l'exploitation du système de vidéosurveillance intelligente, caractérisé en ce que l'opération de calibrage consiste :

- à acquérir au moins une image d'une scène dans laquelle un événement de vidéosurveillance pourrait survenir, l'image acquise étant affichée sur un afficheur 2D ;
- à sélectionner au moins une première paire de lignes parallèle à une direction du modèle de calibrage et au moins une seconde paire de lignes parallèle à une autre direction du modèle de calibrage et à les superposer avec un élément réaliste plan de ladite image de la scène, la sélection et la superposition étant exécutées à l'aide de moyens de conception assistée par ordinateur sur l'afficheur 2D;

- la première et la second paire de lignes sélectionnées étant associée à un plan de référence, comme un plan horizontal dans au moins une image de la source d'images sélectionnée, à déterminer une dimension unitaire le long d'une direction orthogonale au plan de référence, comme une hauteur de référence relativement au plan horizontal
- à mettre à jour le modèle de calibrage sur la base des données produites par la sélection des lignes et/ou de la hauteur de référence.

Selon un aspect de l'invention, une étape préalable de correction de la distorsion optique de la caméra est exécutée avant l'acquisition de la première image de calibrage.

Selon un aspect de l'invention, le procédé comporte une étape de sélection préalable d'une source d'images destinée à produire au moins une image de ladite scène dans laquelle un événement de vidéosurveillance pourrait survenir.

Selon un aspect de l'invention, la paire de lignes parallèles sélectionnées étant associée à un plan de référence, comme un plan horizontal dans au moins une image de la source d'images sélectionnée, le procédé comporte de plus une étape de détermination d'une dimension unitaire le long d'une direction orthogonale au plan de référence, comme une hauteur de référence relativement au plan horizontal.

Selon un aspect de l'invention, le procédé consiste aussi en :

- une étape de calcul des points de fuite et de calcul de l'horizon ;
- une étape de calcul de la focale de la prise de vue ;
- une étape de calcul de la matrice intrinsèque de la caméra ;
- une étape d'estimation de la matrice extrinsèque de la caméra à un facteur d'échelle arbitraire ;
- une étape de calcul de la matrice de calibrage ; et/ou
- une étape de correction du facteur d'échelle.

Selon un aspect de l'invention, le procédé comporte aussi une étape de choix d'une méthode de calibrage choisie parmi :

- une méthode de calibrage sur la base de deux ensembles perpendiculaires (x, y) de paires de lignes parallèles ;
- une méthode de calibrage sur la base d'un cuboïde ; et
- une méthode de calibrage sur la base d'une grille ;

de façon à produire un modèle de calibrage de caméra.

Selon un aspect de l'invention, un test de calibrage est exécuté pour valider le modèle de calibrage déterminé sur la base des étapes précédentes.

Selon un aspect de l'invention, le procédé comporte une étape de représentation et/ou de modélisation de scènes 3D acquises sur la base d'une image bidimensionnelle et du modèle de calibrage validé.

Selon un aspect de l'invention, le procédé consiste aussi à déterminer au moins une zone de surveillance en relation avec le modèle de calibrage validé.

Selon un aspect de l'invention, pour déterminer au moins une zone de surveillance, le procédé consiste aussi à déterminer une première zone horizontale, puis à étendre la dimension de la zone horizontale le long de la direction verticale déterminée par le modèle de calibrage validé.

Selon un aspect de l'invention, le procédé consiste aussi à associer au moins un événement sélectionné parmi une liste prédéterminée d'événements parmi lesquels :

  -- l'intrusion,
  -- la présence,
  -- le passage ; et
  -- le passage conditionnel,

chacun des événements de la liste prédéterminée se rapportant à un module de détection d'événements d'au moins un système de vidéosurveillance intelligente, à une zone de surveillance déterminée.

Selon un aspect de l'invention, le procédé consiste aussi à établir un projet de configuration comportant un projet de calibrage établi sur la base des données de calibrage, et le cas échéant un projet de modélisation établi sur la base des données de spécification de zones de surveillance et d'événements associés.

L'invention concerne aussi un outil de configuration d'au moins un système de vidéosurveillance intelligente mettant en oeuvre le procédé de configuration au-dessus, caractérisé en ce qu'il comporte :

• un moyen pour enregistrer une image 2D d'une scène réelle,
• un module de calibrage *pour selectionner au moins une première paire de lignes parallèle à une direction (x) d'un modèle de calibrage et au moins une seconde paire de lignes parallèle à une autre direction (y) du modèle de calibrage, en ce que la première et la second paire de lignes sélectionnées étant associée à un plan de référence, comme un plan horizontal dans au moins une image de la source d'images sélectionnée, pour déterminer une dimension unitaire le long d'une direction orthogonale au plan de référence, comme une hauteur de référence relativement au plan horizontal, et pour superposer avec un élément réaliste plan de image de la scène,*
• *un moyen pour mettre à jour le modèle de calibrage sur la base des données produites par la sélection des lignes et/ou de la hauteur de référence, et*
• un module de modélisation de scènes 3D et/ou un moyen de test de réussite de l'opération de calibrage.

Selon un aspect de l'invention, le module de calibrage coopère avec une base de données de projets de calibrage.

Selon un aspect de l'invention, le module de modélisation de scènes 3D coopère avec une base de données de projets de surveillance.

Selon un aspect de l'invention, l'outil de configuration comporte un module de communication téléinformatique pour adresser au moins une caméra de vidéosurveillance à calibrer et/ou un système de vidéosurveillance intelligente lors d'une opération de configuration au moyen d'une application de configuration exécutée à distance et indépendamment du reste de l'application de vidéosurveillance intelligente exécutée localement.

D'autres caractéristiques et avantages de la présente invention seront mieux compris à l'aide de la description et des figures annexées parmi lesquelles :

  -- la figure 1 représente un schéma bloc d'un outil de configuration selon l'invention ;
  -- la figure 2 représente les moyens mis en oeuvre lors de l'exécution d'une opération dé configuration sur la base de l'invention ; et
  -- la figure 3 représente un organigramme d'une partie du procédé de configuration de l'invention ;
  -- la figure 4 représente un schéma bloc d'un premier mode de réalisation d'un dispositif de vidéosurveillance intelligente exploitant le procédé et le dispositif de l'invention ;
  -- la figure 5 représente un schéma bloc d'un second mode de réalisation d'un réseau de dispositifs de vidéosurveillance intelligente exploitant le procédé et le dispositif de l'invention ; et
  -- les figures 6 à 8 représentent l'organisation d'une application logicielle exécutée sur un dispositif de configuration mettant en oeuvre le procédé de l'invention dans un mode particulier de réalisation.

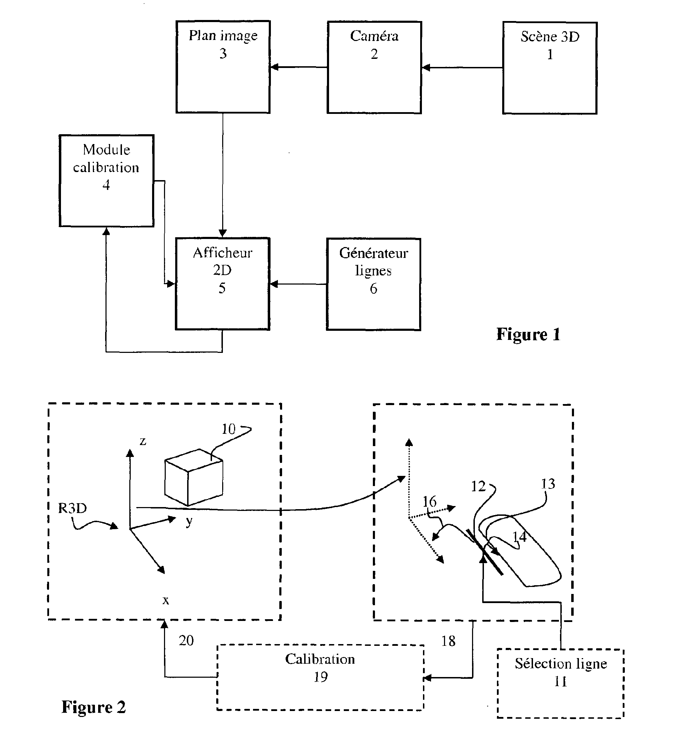

À la figure 1, on a représenté un schéma bloc d'une partie d'un outil de configuration dans un mode de réalisation de l'invention. L'outil de configuration selon l'invention est adapté pour fonctionner avec et dans le cadre d'une application de vidéosurveillance intelligente du type comportant essentiellement :

  -- une source d'images, fixes ou en séquences comme une caméra vidéo ;
  -- un ordinateur local ou réparti sur un réseau de communication téléinformatique ; et
  -- un programme d'ordinateur exécutable sur l'ordinateur et susceptible d'analyser les images produites par la source d'images et, en fonction des paramètres déterminés à l'aide de l'outil de configuration de l'invention, de détecter des événements de vidéosurveillance, comme des intrusions dans des zones prédéterminées, ou comme la présence d'un objet prédéterminé dans une image.

L'outil de configuration selon l'invention est mis en oeuvre lors de l'installation d'un système de vidéosurveillance intelligente, mais aussi dès que la qualité de la détection des événements programmés descend sous un niveau de seuil acceptable, auquel cas le procédé de l'invention consiste à exécuter de nouveau la configuration de l'application de vidéosurveillance intelligente à l'aide de l'outil de configuration précité.

Ainsi qu'il sera décrit plus loin, selon un aspect particulier de l'invention, l'outil de configuration de systèmes de vidéosurveillance intelligente est relativement indépendant de chacun des systèmes de vidéosurveillance intelligente qu'il sert à configurer. Selon cet aspect particulier de l'invention, l'outil de configuration est exécuté à distance à l'aide d'un réseau de communication téléinformatique auquel chaque système de vidéosurveillance intelligente est connecté. En fonction des requêtes de chacun des systèmes de vidéosurveillance intelligente auquel il est connecté, l'outil de configuration permet à distance de réaliser la configuration d'une application déterminée de vidéosurveillance intelligente.

Essentiellement, l'opération de configuration selon l'invention comporte elle-même deux opérations composantes qui sont respectivement :

     -- une opération de calibrage de la source d'images ; et, le cas échéant,

     -- une opération de modélisation qui permet d'adapter les paramètres de calibrage, lorsque cette opération de calibrage a réussi, à l'application de vidéosurveillance intelligente à laquelle la configuration s'applique.

L'opération de calibrage est décrite à l'aide de la figure 1 dans le cadre d'une source d'images constituée par une caméra de prise de vues vidéos. Une scène tridimensionnelle (3D) 1 est représentée dans un plan image à deux dimensions à l'aide d'une caméra vidéo 2. Le plan image 3 peut être adressé en lecture sur un afficheur 5 bidimensionnel 2 D, comme la mémoire associée à l'écran de l'ordinateur sur lequel est exécuté le procédé de configuration de l'invention.

Associé avec le contrôleur de l'écran d'affichage 5, est prévu un générateur 6 d'éléments graphiques permettant le calibrage de l'image générée par la caméra 2. À cet effet, un module de calibrage 4 est connecté au contrôleur de l'afficheur 5 de sorte que la validation des éléments graphiques permettant le calibrage par l'utilisateur est prise en compte par le module de calibrage qui exécute alors l'opération de calibrage selon des éléments connus.

Selon un aspect de l'invention, l'opération de calibrage est exécutée sur la base de la saisie de lignes droites dans les trois directions représentées dans l'image en perspective, telle qu'elle apparaît sur l'afficheur 2D 5.

À la figure 2, on a représenté le détail de l'opération de calibrage dans un mode de réalisation de l'invention. L'opération de calibrage est initiée par la sélection et la validation d'une première ligne 12 qui est sélectionnée par un organe de sélection de lignes de calibrage 11 associées avec le plan image 3 dans lequel est représentée l'image issue de la caméra 2 de la figure 1.

L'utilisateur repère, dans l'image bidimensionnelle affichée sur l'afficheur 5 et qui représente une scène réelle 3D, des éléments rectilignes dans la représentation d'un objet de la scène, comme le bord d'une route ou d'une table ou d'un autre objet de ce genre, et qui se trouvent dans le plan horizontal relativement à la verticale du lieu, quand il s'agit d'une scène représentative d'un environnement réel. Il peut alors aligner une droite comme la droite 12 avec le bord 13 d'un élément dessiné dans l'image. Il réalise pour cela un tracé selon les moyens connus de la conception assistée graphique par ordinateur, par exemple à l'aide d'une souris et d'un curseur graphique représenté à l'écran, d'une droite 12 parallèle au bord 13. Puis, il sélectionne un point de la droite à l'aide de la souris et translate parallèlement à elle-même la ligne droite 12 en superposition avec le bord 13 selon le tracé de la flèche 14 représentée à la figure 2.

L'utilisateur valide alors la sélection de la première ligne 12 par exemple en cliquant sur un bouton de l'interface graphique associée au contrôleur de l'afficheur 5. Un signal de validation produit par le bouton de validation de l'interface graphique est transmis au module de calibrage 19 qui reçoit aussi une information d'association de la droite 12 à la première direction (x) d'un repère du modèle de calibrage. Dans le modèle de la scène 10, la ligne 12 sélectionnée dans l'opération de calibrage est alors associée par une opération de calibrage 16 d'adaptation d'une première direction horizontale avec une première direction horizontale d'un repère R3D du modèle de calibrage de caméra.

L'opération de calibrage par adaptation d'une seconde direction horizontale est alors répétée de la même manière, pour définir la seconde direction (y) du repère R3D du modèle de calibrage de caméra.

Dans un mode préféré de réalisation, pour des raisons liées au mode de résolution algébrique des systèmes linéaires, le modèle de calibrage exécuté dans le module consiste essentiellement en un jeu de paramètres matriciels et en un moyen de résolution d'une équation matricielle. Pour rendre le système linéaire résolvable, il faut disposer d'un nombre suffisant de paramètres géométriques. Selon le procédé de l'invention, la donnée de deux paires de lignes parallèles représentant un plan de référence horizontal procure le nombre nécessaire de paramètres géométriques pour renseigner le modèle de calibrage de scène.

A cette fin, le procédé de l'invention dans son meilleur mode de réalisation, consiste à disposer :

•      une première paire de lignes parallèles à la ligne 12 pour spécifier la direction (x) du repère R3D ;

•      une seconde paire de lignes parallèles, pour représenter une seconde direction horizontale (y) du repère R3D.

Comme il a été exposé dans le mode simplifié de la figure 2, chaque ligne est alignée avec l'un des bords d'un objet dont l'utilisateur détermine qu'il est disposé dans un plan horizontal, relativement à la verticale du lieu. Dans un mode préféré de réalisation, le repère R3D de représentation de scènes est un repère orthonormé. Il en résulte que, préférentiellement, le procédé de l'invention consiste à choisir une première paire de lignes parallèles à une première direction et une seconde paire de lignes parallèles à une seconde direction, les première et seconde directions étant associées à deux directions orthogonales du repère R3D. Lors de cette sélection par l'utilisateur, chaque paire de lignes est sélectionnée en superposant une ligne avec un élément de l'image en cours de calibrage. Cet élément est la représentation d'une partie plane, préférentiellement horizontale, d'un objet réel de l'image en cours de calibrage. Ce pourra être selon les circonstances une mosaïque disposée sur une partie plane horizontale du sol, ou le plateau d'une table dans un local, etc.

Le procédé de l'invention consiste ensuite à spécifier une hauteur de référence de la caméra de prise de vue, ou plus généralement de la hauteur de référence permettant de déterminer une unité de mesure des hauteurs dans l'image. Par exemple, une telle hauteur de référence en vidéosurveillance traditionnelle d'intrusions, consistera dans la hauteur standard d'un individu dans l'image de la scène. Par défaut, la hauteur de référence est fixée à 1 mètre au-dessus du sol. La direction verticale est directement dérivée de la donnée de la paire de droites des directions (x) et (y), ou de la donnée des deux paires parallèles de droites des directions (x) et (y) selon que le mode simplifié ou le meilleur mode de calibrage par droites horizontales a été retenu par l'utilisateur.

Dans un mode particulier de réalisation, le procédé de configuration, dans son opération de calibrage, comporte après l'étape de spécification d'un plan horizontal de référence décrit ci-dessus, une étape de spécification de la hauteur de référence.

Dans l'étape de spécification de la hauteur de référence, l'utilisateur détermine à l'aide du pointeur d'écran sur le dispositif d'affichage 5 deux points sur une verticale du lieu représentant cette hauteur de référence par exemple, unitaire de 1 mètre ou de toute autre valeur selon la scène tridimensionnelle imagée. A cette fin, l'outil de configuration comporte un moyen pour afficher une représentation en perspective du repère R3D sur le dispositif d'affichage 5. La représentation en perspective du repère R3D du modèle de calibrage est disposée en un point arbitraire de l'image, préférentiellement à l'intersection de deux des droites tracées lors de la détermination des deux directions horizontales (x) et (y) du repère R3D précitées.

En effet, ce point d'intersection représente un point particulier d'un objet de référence dans la scène, comme par exemple le sol. Il est alors facile à l'utilisateur d'estimer la hauteur apparente à laquelle se trouve le second point figurant dans la verticale la valeur de la hauteur de référence, bien que celle-ci, naturellement ne puisse être apparente dans la scène.

Estimant cette hauteur de référence, l'utilisateur déplace, à l'aide de la souris, ou de tout autre organe de pointage, le curseur d'écran et clique sur un point sur une représentation en perspective disposée sur le dispositif d'affichage 5 de la direction (z) verticale du repère R3D. Puis, une fois la saisie du point de hauteur de référence validée, l'outil de configuration de l'invention active un moyen de saisie d'une valeur numérique de l'estimation de la hauteur de référence. Dans le cas le plus fréquent, il s'agira de la hauteur au dessus de l'élément de référence, comme le sol.

L'indication du point sélectionné arbitrairement sur la représentation en perspective du repère R3D du modèle de calibrage et de sa valeur numérique saisie sont communiquées alors au module de calibrage 4 pour convertir les données d'image exprimées en pixels en données géométriques dans le repère R3D de représentation 3D de la scène prise par la caméra 2.

On va maintenant décrire une méthode permettant de déterminer le modèle de calibrage sur la base de l'invention.

Le procédé de l'invention comporte une étape pour déterminer un ensemble de constantes qui sont ensuite utilisées pour l'application. Parmi ces constantes se trouvent :

- la position dans l'image 2D du centre optique de la caméra déterminé par sa position en pixels dans l'image (avec une origine du repère des pixels en haut à gauche du plan image) : demie largeur de l'image acquise et demie hauteur de l'image acquise ;
- le ratio P du capteur d'image composé d'une matrice de pixels actifs présentant chacun une largeur largeur_pixel, et une hauteur hauteur_pixel, le ratio étant déterminé par la relation $P = largeur\_pixel/hauteur\_pixel$,
- l'obliquité S des axes X et Y du repère R3D utilisé pour la modélisation de scènes dans les images ultérieurement acquises, cette obliquité S étant préférentiellement fixée à 90° d'angle.

L'utilisateur qui exécute la partie de calibrage du procédé de configuration de l'invention exécute alors la spécification d'un ensemble (x) de deux lignes parallèles dans l'environnement réel (a1 et a2) se trouvant sur le sol ou sur un plan horizontal et parallèle au sol, proche du sol. Il exécute ensuite la spécification d'un ensemble (y) de deux lignes parallèles dans l'environnement réel (b1 et b2) se trouvant sur le sol ou sur un plan horizontal et parallèle au sol, proche du sol et perpendiculaires à l'ensemble (x).

Puis, le procédé de calibrage comporte une étape de travail dans l'espace de projection de l'environnement réel sur un écran, considéré comme une surface plane au cours de laquelle on produit la projection sur l'écran des ensembles (x) et (y) de lignes parallèles deux à deux, de sorte que soit produit un ensemble de lignes dans l'espace projectif 2D soit (x') la projection de l'ensemble (x) et (y') la projection de l'ensemble (y).

Puis, le procédé de calibrage comporte successivement :

- une étape de calcul des points de fuite et de calcul de l'horizon ;

- une étape de calcul de la focale de la prise de vue ;
- une étape de calcul de la matrice intrinsèque de la caméra ;
- une étape d'estimation de la matrice extrinsèque de la caméra à un facteur d'échelle arbitraire ;
- une étape de calcul de la matrice de calibrage ;
- une étape de correction du facteur d'échelle.

Dans un mode particulier de réalisation, l'étape de calcul des points de fuite et de calcul de l'horizon comporte une étape de détermination de deux points de fuite dans l'espace de l'image 2D en les identifiant avec les points d'intersection, soit le point A dans l'espace 2D des lignes (x') et soit le point B dans l'espace 2D des lignes (y'). L'étape de calcul de l'horizon est basée sur l'identification de la ligne d'horizon H avec la droite joignant les points de fuite A et B.

Dans un mode particulier de réalisation, l'étape de calcul de la focale de la prise de vue comporte une étape de calcul de la projection dans l'espace 2D de l'image, soit le pixel O' de l'image sur l'horizon H. La focale F est alors déterminée par une relation de la forme :

$$F = \sqrt{\left| |O'A| * |O'B| - |OO'|^2 \right|}$$

Dans un mode particulier de réalisation, l'étape de calcul de la matrice intrinsèque INTR de la caméra consiste à calculer une matrice 3 x 3 définie par :

$$\begin{bmatrix} P \times F & \cos(S) & O.x \\ 0 & F & O.y \\ 0 & 0 & 1 \end{bmatrix}$$

dans laquelle les coordonnées du point O sont respectivement dans le repère 2D O.x et O.y dans les directions respectivement horizontale et verticale, P, F et S ont été définis plus haut.

Dans un mode particulier de réalisation, l'étape d'estimation de la matrice extrinsèque EXTR de la caméra à un facteur d'échelle arbitraire consiste à exprimer la transformation du repère 3D de représentation de scène par une matrice de la forme de la matrice Identique, au facteur d'échelle près.

Dans un mode particulier de réalisation, l'étape de calcul de la matrice de calibrage CAL comporte une étape pour calculer le produit matriciel défini par :

$$CAL = INTR \times EXTR^{-1}$$

Dans un mode particulier de réalisation, l'étape de correction du facteur d'échelle consiste à définir un segment de droite vertical à partir du sol représenté dans l'image 2D en cours de calibrage, le long duquel l'utilisateur saisit une hauteur réelle exprimée en mètres réels de sorte que le procédé de configuration permette de retrouver l'unité de mesure réelle dans la scène. Après la mesure de la hauteur du segment en pixels dans l'image 2D réalisé automatiquement, le procédé consiste à calculer le rapport Rz de facteur d'échelle verticale en divisant la hauteur Hy calculée en pixels dans l'image, par la hauteur Hz saisie par l'utilisateur à l'aide d'une interface de saisie numérique de hauteurs verticales réelles.

L'étape de calibrage exécutée dans le procédé de configuration de l'invention et qui a été décrite ci-dessus en utilisant deux ensembles perpendiculaires de deux droites parallèles (x) et (y) peut être remplacée par :

- une étape de calibrage sur la base d'un cuboïde, étape au cours de laquelle on détermine un troisième point de fuite ; ou
- une étape de calibrage sur la base d'une grille.

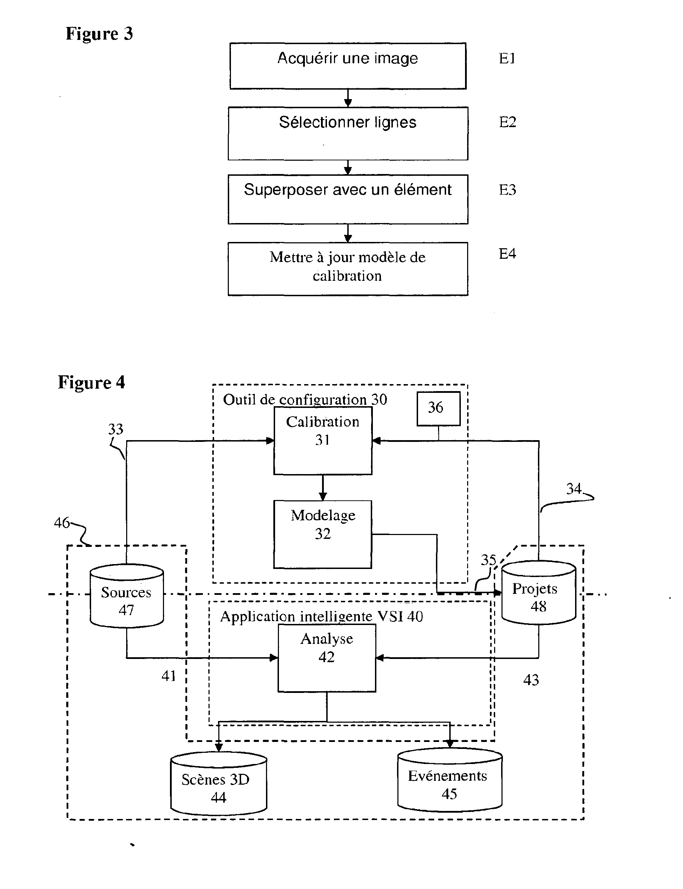

A la figure 3, on a représenté un organigramme de la partie du procédé de configuration de l'invention qui permet d'établir l'opération de calibrage proprement dite.

Lors de l'étape E1 : le procédé consiste à acquérir une image en deux dimensions d'une scène en trois dimensions.

Lors de l'étape E2 : le procédé consiste ensuite à sélectionner au moins deux paires de lignes parallèles dans deux directions d'un plan horizontal identifié par l'utilisateur dans l'image en deux dimensions de la scène 3D acquise lors de l'étape E1. Ainsi qu'il a été décrit plus haut, dans un autre mode de réalisation, les deux directions sont déterminées au moyen de la sélection des deux paires de lignes parallèles. Ainsi qu'il a été décrit plus haut, dans un autre mode de réalisation, la sélection des deux directions du plan horizontal est complétée par la détermination de la hauteur de référence, par sélection d'au moins un point de placement estimé d'une hauteur de référence.

Lors de l'étape E3 : le procédé consiste à superposer chaque ligne sélectionnée dans l'étape précédente avec un élément graphique détecté sur un objet disposé dans le plan horizontal identifié dans l'image en deux dimensions de la scène en trois dimensions acquise lors de l'étape E1.

Lors de l'étape E4 : le procédé consiste ensuite à mettre à jour le modèle de calibrage sur la base des données produites par la sélection des lignes et ou de la hauteur de référence, particulièrement pour produire un repère R3D de l'espace à trois dimensions de modélisation de la scène 3D acquise.

À la figure 4, on a représenté un schéma bloc d'un mode de réalisation d'un dispositif de vidéosurveillance intelligente exploitant le procédé et le dispositif de l'invention pour exécuter sa configuration.

Ainsi qu'il a été expliqué plus haut, l'outil de configuration 30 est indépendant du système de vidéosurveillance intelligente 40. L'outil de configuration 30 est connecté avec celui-ci et échange des données de fonctionnement par un moyen de connexion informatique avec des sources de données contenues dans un réservoir de sources de données 46.

L'outil de configuration 30 comporte essentiellement :

-- un module de calibrage 31, dont le fonctionnement a été décrit ci-dessus avec des figures 1 à 3 dans un mode particulier de réalisation, et
-- un module 32 de modelage ou de représentation de scènes 3D, qui sera décrit plus loin.

Particulièrement, l'opération de calibrage qui a été décrite ci-dessus, notamment à l'aide des figures 1 à 3, peut être préférentiellement précédée d'une opération de correction de la distorsion appliquée par l'optique de la caméra à la détection de l'image bidimensionnelle fournie en entrée de l'outil de configuration.

Dans un mode de réalisation, l'outil de configuration exécute une opération préalable de correction des distorsions optiques en fournissant à l'utilisateur un outil de correction des distorsions. L'outil de correction des distorsions est constitué principalement par un outil de saisie d'un paramètre k de distorsion optique. Dans un mode particulier de réalisation, l'outil de saisie d'un paramètre k de distorsion optique comporte la représentation d'une icône figurant une glissière dont le déplacement du curseur permet de saisir la valeur désirée du paramètre k de correction de distorsion optique. À chaque déplacement du curseur sur la glissière, la valeur instantanée du paramètre k de correction de distorsion optique est fournie en entrée d'un module logiciel, appartenant à l'outil de configuration et appliquant une correction des distorsions optiques sur un tableau représentatif des positions des pixels dans l'image pratiquement acquise par la caméra. Un pixel, adressé dans le plan image de l'image acquise par la caméra introduisant une distorsion, est transformé en un pixel d'un plan image corrigé de sorte qu'une ligne droite visible par l'utilisateur sur la représentation instantanée du plan image de l'image acquise sous la forme d'une ligne courbe soit alors représentée sous la forme d'une ligne droite dans le plan image corrigé.

Dans un mode de réalisation particulier, l'outil de correction des distorsions comporte un module logiciel qui reçoit en entrée d'une part le plan image de l'image réellement acquise par la caméra dont la distorsion géométrique doit être corrigée et d'autre part la valeur instantanée du paramètre k de correction de la distorsion géométrique. Le module logiciel exécute une correction de la distorsion géométrique selon une équation de la forme :

$$r' = c + r*(1 + k*r^2)$$

dans laquelle :

c représente la position du centre optique de la caméra déterminée par un moyen connu ;
r représente la distance entre le pixel traité et le centre optique ;
k représente le paramètre de distorsion optique saisie à l'aide de l'outil de saisie d'un paramètre de distorsion optique ; et
r' représente la distance corrigée du pixel dans le plan image corrigé.

Le module logiciel de l'outil de correction des distorsions fournit alors en sortie un plan image corrigé qui est transmis au moyen de visualisation associée à l'outil de configuration de l'invention pour permettre à l'utilisateur de saisir une valeur du paramètre k de correction de distorsion optique permettant de représenter une ligne droite distordue par la caméra en est une ligne droite corrigée dans le plan image corrigé qui sera ensuite transmise à l'outil de calibrage 31 proprement dit.

Particulièrement, l'opération de calibrage qui a été décrite sur la base de la sélection de lignes ou de paires de lignes parallèles, selon un procédé qui fait partie de la présente invention, peut aussi être exécutée avec des moyens connus. L'outil de calibrage de la présente invention peut alors recourir à un moyen pour identifier un cube dans l'image en perspective de la scène 3D, puis pour appliquer des étapes connues de calibrage sur la base d'un cuboïde. Dans un autre mode de réalisation, l'outil de calibrage de la présente invention peut aussi recourir à un moyen pour générer une mire associée à l'image de référence, fournie en entrée de l'outil de calibrage, puis pour appliquer des étapes connues de calibrage sur la base d'une mire.

Le modèle de calibrage est constitué sous la forme d'un fichier de données de calibrage. Le fichier de données de calibrage est structuré en un projet de calibrage, ou plus généralement selon l'invention, de configuration qui détermine notamment les paramètres matriciels du modèle matriciel enregistré dans une mémoire d'un moyen pour transformer les coordonnées d'un pixel de l'image en perspective en coordonnées géométriques dans le repère R3D calculé dans une étape précédente de calibrage du système d'acquisition d'image ou système de vidéosurveillance intelligente. Le fichier de données de calibrage est accessible dans un projet de calibrage enregistré dans une base de données des projets de calibrage 48. La base de données des projets de calibrage appartient au réservoir des données 46 qui a été décrit plus haut.

Les images de référence qui servent à l'opération de calibrage, sont issues d'une base de données des sources d'image 47, la base de données 47 des sources d'image appartenant au réservoir des données 46 qui ont été décrites plus haut. Particulièrement, une source d'images est connectée depuis la base de données des sources 47 à l'outil de calibrage par un lien 33 d'ouverture d'image de référence, notamment par une opération de sélection d'une source d'images ainsi qu'il sera décrit plus loin.

L'outil de configuration 30 comporte un moyen de sélection (non représenté) pour activer le lien 33 avec la base de données 47 des sources d'images contenues dans le réservoir de données 46. Le moyen de sélection comporte essentiellement une liste déroulante dans laquelle apparaissent les identifications de chacune des sources d'images disponibles dans la base de données des sources 47. Lorsque l'utilisateur sélectionne une identification dans la liste déroulante, la source d'images adressée par l'identification sélectionnée est alors connectée en entrée d'images de référence (non représenté à la figure 4) de l'outil de calibrage proprement dit 31.

L'outil de configuration 30 comporte aussi un moyen 36 pour créer un nouveau projet de configuration, respectivement de calibrage, qui est alors initialisé dans l'outil de configuration 30 et préalablement enregistrée avant toute opération de calibrage et ou de modelage de scène, dans la base de données des projets de configuration 48 du réservoir de données 46 à laquelle l'outil de configuration 30 est connecté par un lien 34. De même, l'outil de configuration comporte un moyen pour ouvrir un projet de configuration, respectivement de calibrage, déjà enregistré dans la base de données des projets 48 par connexion par le lien 34. Le lien 34 est, comme le lien 33 précité, activé par un moyen de sélection (non représenté) pour activer le lien 34 avec la base de données 46 des projets de configuration.

L'opération de calibrage est alors exécutée, ou bien sur la base de la création d'un nouveau projet de calibrage, ou bien sur la base des données de calibrage déjà enregistrées dans le projet de calibrage chargé dans l'outil de calibrage. L'opération de calibrage est alors exécutée selon les opérations décrites ci-dessus et qui comportent principalement :

　　-- une opération de correction des distorsions le cas échéant,
　　-- une opération de détermination d'un repère R3d, préférentiellement à l'aide d'une paire de lignes parallèles ; et
　　-- une opération de détermination de la hauteur de référence de la caméra de prise de vue.

Lorsque l'opération de calibrage est exécutée avec succès dans l'outil de configuration 30 par le module de calibrage 31, les données de calibrage disponibles sont transmises à un outil 32 de modelage ou de représentation de scènes. Cet outil 32 de modelage de scène, aussi désigné sous le terme de module de modélisation de scènes 3D, exécute une opération de modelage de scènes comme seconde opération de configuration dans le procédé de l'invention.

Dans un mode de réalisation, l'outil de configuration, pour exécuter le procédé de configuration de l'invention comporte aussi un moyen de test de réussite de l'opération de calibrage. Dans un mode particulier de réalisation, le test de réussite de l'opération de calibrage consiste essentiellement dans la succession d'opérations suivantes :

- sélection d'une image de référence de test de réussite de l'opération de calibrage ;
- exécution de la modélisation dans les moyens de modélisation 3D de l'outil de modelage de scène d'un objet volumique ou surfacique connu de l'image de référence de test de réussite de l'opération de calibrage, dit objet de test de calibrage, sa modélisation étant définie comme une modélisation de test de calibrage ;
- exécution par les moyens de modélisation 3D de l'outil de modelage de scène de la reconstruction dans le nouveau repère R3D, obtenu à l'issue de l'opération de calibrage qui est en cours de test de réussite, de la scène contenue dans l'image de référence de test de réussite de l'opération de calibrage, cette modélisation incluant notamment une modélisation dite « réelle » de l'objet de test de calibrage ;
- identification dans la modélisation 3D de l'image de référence de test de réussite de l'opération de calibrage de la modélisation « réelle » de l'objet de test de calibrage ;
- comparaison de la géométrie de la modélisation « réelle » de l'objet de test de calibrage avec la géométrie de la modélisation de référence de test de calibrage ;
- exécution d'une action de test de réussite de calibrage.

L'action de test de réussite de l'opération de calibrage est réalisée par différents moyens selon les modes de réalisation de l'outil de configuration de l'invention.

Dans un mode de réalisation, le moyen de test de réussite de l'opération de calibrage de l'outil de configuration de l'invention comporte :

- un moyen pour présenter une modélisation de référence d'un objet de référence de calibrage ;
- un moyen pour présenter une image de référence de test de calibrage contenant une représentation de l'objet de référence de test de calibrage ;
- un moyen pour exécuter la modélisation 3D de la scène contenue dans l'image de référence dans l'espace 3D sous le repère R3D issue du calibrage en cours de test ;
- un moyen pour exécuter une comparaison entre la modélisation « réelle » et la modélisation de référence, par exemple comportant deux contrôles de type image placés sur le même écran et coopérant avec un bouton d'acquittement par l'utilisateur.

Dans un tel mode de réalisation, la comparaison des géométries des deux images des représentations 3D de référence et « réelle » de l'objet de référence est exécutée visuellement par l'opérateur qui a effectué le calibrage. Si les géométries lui paraissent identiques, l'opérateur valide le calibrage en cliquant sur le bouton de validation. Dans le cas contraire, il invalide le calibrage et reprend l'opération de calibrage au début.

Dans un autre mode de réalisation, l'opération de comparaison des géométries est exécutée par un moyen automatique. Particulièrement, les coordonnées des points détectables des modélisations 3D de référence et « réelle » sont comparées par un outil de comparaison de points 3D dans les modélisations 3D de l'outil de modelage. Si l'ensemble des comparaisons des points détectables se trouve dans une tolérance déterminée, la validation de l'opération de calibrage est effectuée automatiquement par production d'un signal, ou message à destination des autres moyens de l'invention. Dans la négative, un signal ou message est transmis à l'outil de configuration pour que soit reprise une nouvelle opération de calibrage.

Dans un mode de réalisation de l'invention, l'outil de modelage de scènes comporte un moyen pour déterminer, dans la scène 3D qui doit être mise en surveillance, des zones de surface ou de volume déterminées par l'opération de modelage.

Lorsque l'opération de modelage de scènes a été exécutée, les données élaborées lors de cette opération par le module de modelage 32 de l'outil de configuration 30 sont alors enregistrées dans le projet de configuration initialement sélectionné pour l'opération de calibrage. Le projet de configuration est alors chargé dans la base de données des projets de configuration 48 par un lien d'écriture 35 de bases de données.

On va maintenant décrire le fonctionnement ultérieur d'un système de vidéosurveillance intelligente sur lequel est exécuté un projet de configuration enregistré dans la base de données des projets de configuration 48.

Le système de vidéosurveillance intelligente comporte un processeur sur lequel est exécutée une application intelligente VSI 40 qui comporte essentiellement un module d'analyse 42 qui comporte deux entrées respectivement :

-- une entrée activée par un lien informatique 41 avec la source de données que l'application intelligente doit surveiller ;
-- une entrée activée par un lien informatique 43 avec la base de données 48 des projets de configuration.

L'application intelligente 40 charge tout d'abord le projet de configuration pour mettre à jour un modèle de calibrage permettant d'interpréter une image bidimensionnelle sous forme d'une synthèse de scènes à trois dimensions. De même, la lecture des projets de configuration chargés par le lien 43 dans l'application intelligente 40 permet de préparer l'ensemble des tests de détection d'événements qui, ainsi sera décrit plus loin, ont été programmés dans le projet de configuration à l'aide de l'outil de modelage de scènes 32 dans l'outil de configuration 30.

Le module d'analyse 42 comporte ensuite deux dispositifs de sortie qui sont essentiellement :

-- un système d'exploitation de scènes 3D 44 ; et
-- un système d'exploitation 45 des événements détectés dans chaque scène 3D par l'exécution des tests de détection d'événements programmés à l'aide des projets de configuration précités.

On remarque que la présente invention permet ainsi de rendre indépendantes les opérations de configuration, d'une part, et les opérations de vidéosurveillance intelligente proprement dites, d'autre part.

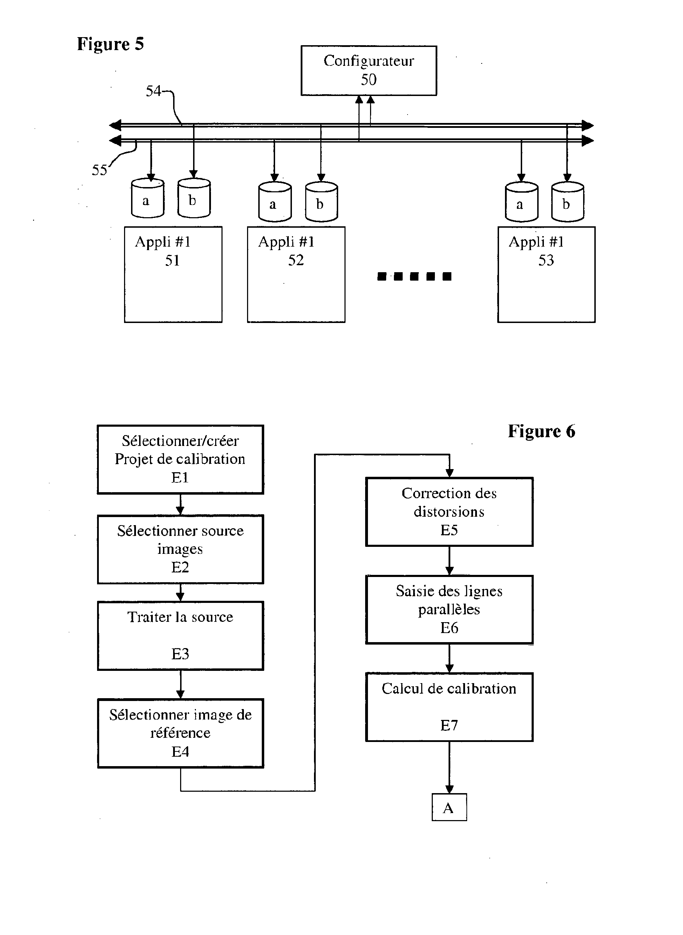

À la figure 5, on a représenté un mode particulier de réalisation de l'invention dans laquelle un seul outil de configuration ou configurateur 50 est connecté par un réseau de communication informatique 54, 55 à une pluralité de systèmes de vidéosurveillance intelligente. Chaque système de vidéosurveillance intelligente comporte principalement une application intelligente 51, 52, 53,... qui est connectée à une paire de bases de données respectivement <u>a</u> de projets de configuration et <u>b</u> de sources d'images.

Lorsqu'une requête de configuration est émise par une application particulière 51 à 53, le configurateur 50 se connecte par la liaison de communication 54 à la base de données d'images <u>a</u> de l'application requérante, et par la liaison de communication 55 à la base de données de projets de configuration <u>b</u>. Il est alors possible d'exécuter à l'aide d'un unique dispositif comme le configurateur 50 une modification d'un projet de configuration sélectionné ou la création d'un nouveau projet de configuration au bénéfice de la seule application intelligente 51 à 53 requérante.

À la différence, dans l'état de la technique, chaque système de vidéosurveillance intelligente doit comporter un moyen de calibrage. Puis, la création d'événements de détection par vidéosurveillance doit alors être exécutée localement. Or, notamment en termes de temps d'utilisation, il apparaît qu'une telle répartition de moyens est insatisfaisante puisque le configurateur 50 n'est activé que rarement pour un système de vidéosurveillance intelligente déterminé. Il est donc avantageux qu'un seul configurateur 50 puisse fonctionner pour plusieurs systèmes de vidéosurveillance intelligente, chaque système requérant une configuration à des moments différents. Par ailleurs, les utilisateurs d'un système de vidéosurveillance intelligente selon l'invention n'ont pas besoin de disposer de compétences particulières en calibrage et en programmation d'événements, ces deux opérations de calibrage et de modelage de scènes étant alors exécutées par du personnel confirmé à distance sur le configurateur 50.

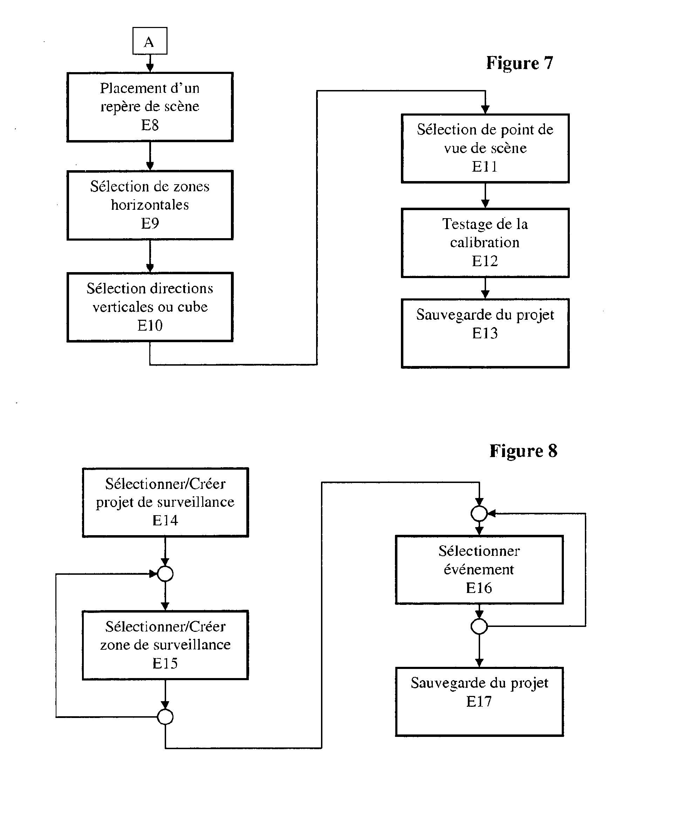

Aux figures 6 et 7, on a représenté un mode particulier de réalisation du procédé de l'invention. À la figure 6, on a représenté plus particulièrement la partie du procédé concernant le calibrage proprement dit, tandis que, à la figure 7, on a représenté la partie du procédé de configuration qui concerne plus spécialement la détermination de la position de la caméra dans la scène 3D reconstituée à l'aide du modèle de calibrage.

Lors d'une première étape E1, principalement initialisée dans le cas de la figure 5 par une requête de configuration produite par un système de vidéosurveillance intelligente connecté par le réseau de télécommunications informatique 54, 55 au configurateur 50, le configurateur exécute la sélection et/ou la création d'un projet de calibrage. Le projet de calibrage peut faire partie d'un projet global dénommé «projet de configuration».

Lors d'une étape E2, le configurateur 50 exécute la sélection d'une source d'images dont l'identification est exécutée par consultation d'une base de données comme la base de données a associée au système de vidéosurveillance intelligente qui a produit la requête de configuration initiale.

Lors d'une étape E3, le configurateur 50 exécute le traitement de la source sélectionnée à l'étape E2, puis lors de l'étape E4, le configurateur 50 exécute la sélection d'une image de référence. Sur la base de l'image de référence sélectionnée, lors d'une étape 1 5, le configurateur 50 exécute une opération de correction des distorsions optiques introduites par la caméra associée à l'image de référence.

Lors d'une étape E6, le configurateur 50 ouvre une séquence d'opérations permettant d'exécuter la série de saisies de lignes parallèles permettant de déterminer un repère R3D de l'espace de représentation de scènes à trois dimensions sur la base de l'image de référence bidimensionnelle acquise, ainsi été décrit à l'aide des figures 1 à 3.

Lors d'une étape E7, le configurateur 50 exécute le calcul de la matrice de calibrage maintenu dans le modèle de calibrage associée avec la source d'images sélectionnée pour l'application de vidéosurveillance intelligente requérante de la configuration.

La suite du procédé de l'invention est représentée à la figure 7 dans laquelle, lors d'une étape E8 le configurateur 50 active un outil de placement de repères de scène 3D sur la représentation bidimensionnelle de l'image de référence en cours de calibrage.

Lors d'une étape E9, le configurateur 50 exécute la sélection de zones horizontales par sélection par exemple de paires de lignes parallèles dans des zones horizontales.

Lors d'une étape E10, le configurateur 50 exécute la sélection d'une direction verticale et ou d'un cube de référence dans la représentation bidimensionnelle de l'image de référence en cours de calibrage.

Lors d'une étape E11, le configurateur 50 exécute la validation un outil de détermination de hauteurs de référence de scènes sous la forme d'un curseur déplaçable le long d'une direction verticale sélectionnée lors de l'étape précédente E10. L'opération peut être exécutée par l'opérateur qui travaille sur le configurateur 50.

Lors d'une étape E12, le configurateur 50 exécute le testage du calibrage uniquement de sorte que si le résultat du test est positif, l'étape suivante E13 de sauvegarde du projet de calibrage est exécuté, tandis que si le résultat du test est négatif, le procédé de calibrage est repris au début.

On va maintenant décrire plus en détail l'opération et l'outil de représentation et/ou de modelage de scènes à l'aide de la figure 8.

Dans un mode particulier de réalisation, le procédé de l'invention exécute l'opération de représentation ou de modelage de scènes de manière indépendante de l'opération préalable de calibrage précédemment décrite. Dans ce cas, le projet de calibrage, produit à l'aide de l'outil de configuration réduit alors à un module de calibrage, est sauvegardé dans la base de données des projets de configuration, sous la forme particulière d'un projet de calibrage. Un projet de surveillance est alors ou bien chargé parmi un jeu de projets de surveillance déjà sauvegardés dans la base de données des projets de configuration, ou bien créé directement. À l'issue de l'opération de représentation ou de modelage de scènes, le projet de surveillance créé ou chargé est alors sauvegardé dans le jeu de projets de surveillance de la base de données des projets de configuration pour être utilisé par une application de vidéosurveillance intelligente associée.

Dans un mode préféré de réalisation, l'opération de représentation ou de modelage de scènes est exécutée selon l'invention en relation avec l'opération de calibrage de façon à constituer avec elle un procédé de configuration d'une application de vidéosurveillance intelligente. Dans ce cas, le projet de surveillance est une partie intégrante du projet de configuration qui est enregistrée à la suite du projet de calibrage. Le projet de configuration est alors constitué de la réunion du projet de calibrage et du projet de surveillance.

À la figure 8, on a représenté un mode de réalisation dans lequel le projet de calibrage n'est pas pris en compte directement, même si l'ensemble des opérations permettant de réaliser le projet de surveillance tient compte de l'existence d'un tel projet, notamment parce que les données de calibrage ainsi que la définition du repère R3D de représentation de scènes 3D sur la base de l'image bidimensionnelle de référence sont prises en compte.

Lors d'une étape E14, l'outil de configuration par son module de représentation de scène 3D exécute la sélection ou la création d'un projet de surveillance ainsi qu'il était expliqué ci-dessus.

Lors d'une étape E15, le module de représentation de scènes 3D exécute la sélection et/ou la création d'une zone de surveillance qui est paramétrée dans un espace de représentation de scènes 3D associée au calibrage réalisé précédemment avec succès pour la caméra associée à l'application de vidéosurveillance intelligente à laquelle le projet de surveillance devra être associé.

Lors d'une étape E16, le module de représentation de scènes 3D exécute la sélection d'un événement particulier à détecter dans une liste d'événements prédéterminés qui est associé à la zone de surveillance sélectionnée lors de l'étape précédente.

Ainsi qu'il est représenté à la figure 8, l'étape E16 de sélection d'événement est répétée pour chaque zone de surveillance créée lors de l'étape E15, tant que le module de représentation de scènes ne déclenche pas l'étape E17 de sauvegarde du projet de surveillance dans la base de données des projets de configuration.

Ainsi qu'il est représenté à la figure 8, l'étape E15 de création ou de sélection de zones de surveillance est répétée tant que le module de représentation de scènes ne déclenche pas l'étape E16 de sélection d'événements déterminés.

Il est ainsi possible d'associer à une scène future dans la modélisation 3D tirée par l'application de vidéosurveillance intelligente de la prise de vue 2D d'une caméra déterminée plusieurs zones de vidéosurveillance ainsi que d'associer à chaque zone de vidéosurveillance des événements permettant de signaler des intrusions et tous autres événements détectables au moyen d'une analyse de l'image de caméra.

On va maintenant décrire le module (non représenté au dessin) appartenant au module de représentation de scènes de l'outil de configuration comme l'outil de configuration 30 ; figure 3 ou l'outil de configuration 50 ; figure 5, et qui permet de déterminer une zone de surveillance dans une scène 3D.

Le procédé de l'invention comporte une étape pour placer un repère sur l'image à un endroit le mieux adapté à la création et/ou sélection de zones de surveillance. L'image est produite sur la base de l'image de référence utilisée pour réaliser l'opération de calibrage puis, l'opération de modélisation de scènes. L'ensemble des données produites pendant l'étape de création de zones de surveillance est ensuite utilisée dans le projet de configuration et mis en oeuvre lors de la surveillance par une application de surveillance intelligente ainsi qu'il a été décrit plus haut.

À cette fin, le module de détermination d'une zone de surveillance dans une zone 3D comporte un outil permettant de verrouiller un repère R3D sous forme d'une icône en un point de l'image bidimensionnelle affichée, le point de l'image bidimensionnelle affiché sélectionné étant alors lié de manière univoque avec un point de la scène 3D calculé sur la base du modèle de calibrage calculé précédemment.

Le procédé de l'invention comporte ensuite une étape pour générer ou modifier une zone de surveillance dans une scène 3D.

Dans un mode particulier de réalisation, le procédé de l'invention consiste à déterminer des zones horizontales relativement à la verticale représentée dans la scène par un des axes, dit axe vertical, du repère 3D déterminé lors d'une étape précédente, puis, dans une étape ultérieure, à déterminer la zone de surveillance en étendant la zone horizontale dans la direction de l'axe vertical déterminé.

Dans le but de déterminer une zone de surveillance dans la scène 3D qui soit adaptée à un espace réel, l'outil de configuration ou de représentation de scènes comporte un module de mesure permettant de mesurer d'une part les longueurs au sol et d'autre part les hauteurs relativement à l'axe vertical d'extension de la zone horizontale qui a été déterminée à l'étape précédente. Il est ainsi possible à l'utilisateur de l'outil de configuration comme le configurateur 50 de sélectionner ou de modeler une zone de surveillance parfaitement adaptée à la géométrie réelle de la scène que la caméra surveille dans le système de vidéosurveillance intelligente associée au projet de configuration en cours d'élaboration.

Le modelage de la scène 3D est réalisé a priori avant que le système de vidéosurveillance intelligente n'ait commencé son activité de surveillance vidéo. La disposition d'au moins une zone de surveillance dans la scène 3D permet, lors de l'opération de configuration, de programmer le fonctionnement du système de vidéosurveillance intelligente associé.

On va maintenant décrire le module (non représenté au dessin) appartenant au module de représentation de scènes de l'outil de configuration comme l'outil de configuration 30 ; figure 3 ou l'outil de configuration 50 ; figure 5, et qui permet de déterminer un événement associé à une zone dans une scène 3D, ladite zone étant déterminée par le module de détermination de zones de surveillance décrit plus haut.

De façon à compléter le modelage de scène 3D appliqué par le module de génération ou de modification de zones de surveillance dans une scène 3D, le procédé de invention consiste à programmer ensuite au moins un événement en relation avec une zone de surveillance déterminée par le module de détermination de zones de surveillance décrit plus haut.

Le module de configuration appartenant à l'outil de configuration ou configurateur 50 ; figure 5, comporte un module de détermination d'événements de vidéosurveillance. Le module de détermination d'événement de vidéosurveillance comporte une liste d'événements préenregistrés, qui sont référencés dans un menu déroulant. Le menu déroulant est exécuté lors de l'étape de détermination d'un événement de vidéosurveillance par l'utilisateur du configurateur 50, une fois la sélection au moins une zone de surveillance exécutée.

Dans un mode particulier de réalisation, quatre événements ou type d'événements sont reprogrammés et disponibles dans l'outil de configuration et qui sont :

-- l'intrusion,

-- la présence,
-- le passage ; et
-- le passage conditionnel.

Dans le système de vidéosurveillance intelligente sont implémentés quatre modules de détection d'événements qui sont :

-- un module de détection d'intrusion,
-- un module de détection de présence,
-- un module de détection de passage ; et
-- un module de détection de passage conditionnel.

Lorsqu'un projet de configuration est chargé par le système de vidéosurveillance intelligente, il exécute différentes implémentations des modules de détection en fonction d'une part des zones de surveillance programmée et pour chaque zone de surveillance des événements ou des types d'événements qui lui sont associés. Ainsi, si une zone de surveillance déterminée est associée avec un événement d'intrusion, le système de vidéosurveillance intelligente exécute un test de détection des intrusions à l'aide du module de détection d'intrusion.

Ainsi, le projet de configuration, et plus particulièrement, le projet de surveillance ainsi qu'il a été décrit à l'aide de la figure 8, enregistre avec la zone de surveillance sélectionnée les événements ou le type d'événements d'intrusion qui permet de programmer ainsi le fonctionnement du système de vidéosurveillance intelligente. Une simple référence au type d'événements que l'on désire détecter suffit à réaliser la programmation du système de vidéosurveillance intelligente associé au projet de configuration.

**Revendications**

1. Procédé de configuration d'au moins un système de vidéosurveillance intelligente sur la base d'un modèle de calibrage d'au moins une caméra de vidéosurveillance, comprenant une opération de préparation du système de vidéosurveillance intelligente, qui comporte elle-même deux opérations successives qui sont une opération de calibrage et une opération de modélisation, et une opération de programmation des événements à détecter lors de l'exploitation du système de vidéosurveillance intelligente, **caractérisée en ce que** l'opération de calibrage consiste :

   • à acquérir (E1) au moins une image d'une scène dans laquelle un événement de vidéosurveillance pourrait survenir, l'image acquise étant affichée sur un afficheur 2D;
   • à sélectionner (E2) au moins une première paire de lignes parallèle à une direction (x) du modèle de calibrage et au moins une seconde paire de lignes parallèle à une autre direction (y) du modèle de calibrage;

   • à les superposer (E3) avec un élément réaliste plan de ladite image de la scène, la sélection (E2) et la superposition (E3) étant exécutées à l'aide de moyens de conception assistée par ordinateur sur l'afficheur 2D ;
   • la première et la second paire de lignes sélectionnées étant associée à un plan de référence, comme un plan horizontal dans au moins une image de la source d'images sélectionnée, à déterminer une dimension unitaire le long d'une direction orthogonale au plan de référence, comme une hauteur de référence relativement au plan horizontal
   • à mettre à jour le modèle de calibrage sur la base des données produites par la sélection des lignes et/ou de la hauteur de référence.

2. Procédé selon la revendication 1, **caractérisé en ce qu'**une étape préalable de correction de la distorsion optique de la caméra est exécutée avant l'acquisition de la première image de calibrage.

3. Procédé selon l'une des revendications 1 ou 2, **caractérisé en ce qu'**il comporte une étape de sélection préalable d'une source d'images destinée à produire au moins une image de ladite scène dans laquelle un événement de vidéosurveillance pourrait survenir.

4. Procédé selon l'une quelconque des revendications précédentes, **caractérisé en ce qu'**il comporte :

   - une étape de calcul des points de fuite et de calcul de l'horizon ;
   - une étape de calcul de la focale de la prise de vue ;
   - une étape de calcul de la matrice intrinsèque de la caméra ;
   - une étape d'estimation de la matrice extrinsèque de la caméra à un facteur d'échelle arbitraire ;
   - une étape de calcul de la matrice de calibrage ;
   - une étape de correction du facteur d'échelle.

5. Procédé selon l'une quelconque des revendications précédentes, **caractérisé en ce qu'**il comporte une étape de choix d'une méthode de calibrage choisie parmi :

   - une méthode de calibrage sur la base de deux ensembles perpendiculaires (x, y) de paires de lignes parallèles ;
   - une méthode de calibrage sur la base d'un cuboïde ; et
   - une méthode de calibrage sur la base d'une grille ;

de façon à produire un modèle de calibrage de caméra.

6. Procédé selon l'une quelconque des revendications précédentes, **caractérisé en ce que** un test de calibrage est exécuté pour valider le modèle de calibrage déterminé sur la base des étapes précédentes.

7. Procédé selon la revendication 6, **caractérisé en ce qu'**il comporte ensuite une étape de représentation et/ou de modélisation de scènes 3D acquises sur la base d'une image bidimensionnelle et du modèle de calibrage validé.

8. Procédé selon la revendication 7, **caractérisé en ce qu'**il consiste à déterminer au moins une zone de surveillance en relation avec le modèle de calibrage validé.

9. Procédé selon la revendication précédente, **caractérisé en ce que**, pour déterminer au moins une zone de surveillance, il consiste à déterminer une première zone horizontale, puis à étendre la dimension de la zone horizontale le long de la direction verticale déterminée par le modèle de calibrage validé.

10. Procédé selon l'une quelconque des revendications 7 à 9, **caractérisé en ce qu'**il consiste à associer au moins un événement sélectionné parmi une liste prédéterminée d'événements parmi lesquels :

    -- l'intrusion,
    -- la présence,
    -- le passage ; et
    -- le passage conditionnel,

chacun des événements de la liste prédéterminée se rapportant à un module de détection d'événements d'au moins un système de vidéosurveillance intelligente, à une zone de surveillance déterminée.

11. Procédé selon l'une quelconque des revendications précédentes, **caractérisé en ce qu'**il consiste à établir un projet de configuration comportant un projet de calibrage établi sur la base des données de calibrage, et le cas échéant un projet de modélisation établi sur la base des données de spécification de zones de surveillance et d'événements associés.

12. Outil de configuration (30 ; 50) d'au moins un système de vidéosurveillance intelligente mettant en oeuvre le procédé de configuration selon au moins l'une des revendications précédentes, **caractérisé en ce qu'**il comporte :

    • un moyen (47, 33) pour enregistrer une image 2D d'une scène réelle,
    • un module de calibrage (31, 36, 34) pour sélectionner au moins une première paire de lignes parallèle à une direction (x) d'un modèle de calibrage et au moins une seconde paire de lignes parallèle à une autre direction (y) du modèle de calibrage, **en ce que** la première et la second paire de lignes sélectionnées étant associée à un plan de référence, comme un plan horizontal dans au moins une image de la source d'images sélectionnée, pour déterminer une dimension unitaire le long d'une direction orthogonale au plan de référence, comme une hauteur de référence relativement au plan horizontal, et pour superposer avec un élément réaliste plan de image de la scène,
    • un moyen pour mettre à jour le modèle de calibrage sur la base des données produites par la sélection des lignes et/ou de la hauteur de référence, et
    • un module de modélisation de scènes 3D (32, 35) et/ou un moyen de test de réussite de l'opération de calibrage.

13. Outil selon la revendication 12, **caractérisé en ce que** le module de calibrage coopère avec une base de données (48) de projets de calibrage.

14. Outil selon la revendication 13, **caractérisé en ce que** le module de modélisation de scènes 3D coopère avec une base de données (48) de projets de surveillance.

15. Outil selon la revendication 14, **caractérisé en ce qu'**il comporte un module de communication téléinformatique (54, 55) pour adresser au moins une caméra de vidéosurveillance à calibrer et/ou un système de vidéosurveillance intelligente lors d'une opération de configuration au moyen d'une application de configuration exécutée à distance et indépendamment du reste de l'application de vidéosurveillance intelligente exécutée localement.

**Patentansprüche**

1. Verfahren zur Konfiguration mindestens eines Systems zur intelligenten Videoüberwachung auf Basis eines Modells zur Kalibrierung mindestens einer Videoüberwachungskamera, umfassend eine Operation zur Vorbereitung des Systems zur intelligenten Videoüberwachung, die ihrerseits zwei aufeinanderfolgende Operationen umfasst, und zwar eine Kalibrieroperation und eine Modellieroperation, und eine Operation zur Programmierung der zu erfassenden Ereignisse während der Nutzung des Systems zur intelligenten Videoüberwachung, **dadurch gekennzeichnet, dass** die Kalibrieroperation darin besteht:

mindestens ein Bild einer Szene zu beschaffen (E1), in der ein Ereignis zur Videoüberwachung auftreten könnte, wobei das beschaffte Bild auf einer 2D-Anzeigeeinrichtung angezeigt wird; mindestens ein erstes Paar von Linien, die parallel zu einer Richtung (x) des Kalibriermodells sind, und mindestens ein zweites Paar von Linien auszuwählen (E2), die parallel zu einer anderen Richtung (y) des Kalibriermodells sind; diese mit einem wirklichkeitstreuen ebenen Element des Bildes der Szene zu überlagern (E3), wobei die Auswahl (E2) und die Überlagerung (E3) mit Hilfe von computergestützten Gestaltungseinrichtungen auf der 2D-Anzeigeeinrichtung ausgeführt werden; bei Zugehörigkeit des ersten und des zweiten Paars von gewählten Linien zu einer Bezugsebene, etwa einer Horizontalebene in mindestens einem Bild der gewählten Bilderquelle, eine unitäre Dimension entlang einer zur Bezugsebene senkrechten Richtung zu bestimmen, etwa einer Bezugshöhe relativ zur Horizontalebene; das Kalibriermodell auf Basis der Daten zu aktualisieren, die durch die Auswahl der Linien und/oder der Bezugshöhe erzeugt werden.

2. Verfahren nach Anspruch 1, **dadurch gekennzeichnet, dass** ein vorhergehender Schritt zur Korrektur der optischen Verzerrung der Kamera vor der Beschaffung des ersten Kalibrierbildes ausgeführt wird.

3. Verfahren nach einem der Ansprüche 1 oder 2, **dadurch gekennzeichnet, dass** es einen Schritt zur vorhergehenden Auswahl einer Bilderquelle umfasst, der dazu bestimmt ist, mindestens ein Bild der Szene zu erzeugen, in der ein Videoüberwachungsereignis auftreten könnte.

4. Verfahren nach einem der vorhergehenden Ansprüche, **dadurch gekennzeichnet, dass** es umfasst:

   einen Schritt zur Berechnung der Fluchtpunkte und zur Berechnung des Horizontes;
   einen Schritt zur Berechnung der Brennweite der Bildaufnahme;
   einen Schritt zur Berechnung der intrinsischen Matrix der Kamera;
   einen Schritt zur Schätzung der extrinsischen Matrix der Kamera mit einem willkürlichen Skalenfaktor;
   einen Schritt zur Berechnung der Kalibriermatrix;
   einen Schritt zur Korrektur des Skalenfaktors.

5. Verfahren nach einem der vorhergehenden Ansprüche, **dadurch gekennzeichnet, dass** es einen Schritt zum Wählen einer Kalibriermethode umfasst, die ausgewählt wird zwischen:

   einem Verfahren zur Kalibrierung auf Basis von zwei zueinander senkrechten Mengen (x, y) von Paaren von parallelen Linien;
   einer Methode zur Kalibrierung auf Basis eines Quaders; und
   einer Methode zur Kalibrierung auf Basis eines Gitters;

so dass ein Modell zur Kamerakalibrierung erzeugt wird.

6. Verfahren nach einem der vorhergehenden Ansprüche, **dadurch gekennzeichnet, dass** eine Kalibrierprüfung ausgeführt wird, um das Kalibriermodell zu validieren, das auf Basis der vorhergehenden Schritte bestimmt wurde.

7. Verfahren nach Anspruch 6, **dadurch gekennzeichnet, dass** es anschließend einen Schritt zur Darstellung und/oder zur Modellierung von 3D-Szenen umfasst, die auf Basis eines zweidimensionalen Bildes und eines validierten Kalibriermodells beschafft wurden.

8. Verfahren nach Anspruch 7, **dadurch gekennzeichnet, dass** es darin besteht, mindestens eine Überwachungszone in Beziehung mit dem validierten Kalibriermodell zu bestimmen.

9. Verfahren nach dem vorhergehenden Anspruch, **dadurch gekennzeichnet, dass** es, um mindestens eine Überwachungszone zu bestimmen, darin besteht, eine erste horizontale Zone zu bestimmen, und dann die Abmessung der horizontalen Zone entlang der vertikalen Richtung zu erweitern, die durch das validierte Kalibriermodell bestimmt wurde.

10. Verfahren nach einem der Ansprüche 7 bis 9, **dadurch gekennzeichnet, dass** es darin besteht, mindestens ein Ereignis zuzuordnen, das aus einer vorbestimmten Liste von Ereignissen gewählt ist, unter denen sind:

   - Eindringen,
   - Anwesenheit,
   - Durchquerung, und
   - bedingte Durchquerung,

wobei jedes der Ereignisse der vorbestimmten Liste sich auf ein Modul zur Erfassung von Ereignissen mindestens eines Systems zur intelligenten Videoüberwachung, in einer bestimmten Überwachungszone, bezieht.

11. Verfahren nach einem der vorhergehenden Ansprüche, **dadurch gekennzeichnet, dass** es darin besteht, ein Projekt zur Konfiguration zu erstellen, umfassend ein Kalibrierprojekt, das auf Basis von Kalibrierdaten erstellt wird, und gegebenenfalls ein Modellierprojekt, das auf Basis von Daten zur Spezifizierung von Überwachungszonen und von zugehörigen Ereignissen erstellt wird.

12. Werkzeug zur Konfiguration (30; 50) mindestens eines Systems zur intelligenten Videoüberwachung, welches das Verfahren zur Konfiguration nach einem der vorhergehenden Ansprüche durchführt, **dadurch gekennzeichnet, dass** es aufweist:

eine Einrichtung (47, 33) zum Aufzeichnen eines 2D-Bildes einer realen Szene,
ein Kalibriermodul (31, 36, 34) zum Wählen mindestens eines ersten Paares von Linien, die parallel zu einer Richtung (x) eines Kalibriermodells sind, und mindestens eines zweiten Paars von Linien, die parallel zu einer anderen Richtung (y) des Kalibriermodells sind, wobei das erste und das zweite Paar von gewählten Linien zu einer Bezugsebene gehören, etwa einer horizontalen Ebene in mindestens einem Bild der gewählten Bilderquelle, um eine unitäre Dimension entlang einer zur Bezugsebene senkrechten Richtung zu bestimmen, etwa eine Bezugshöhe relativ zur Horizontalebene; und um eine Überlagerung mit einem ebenen, wirklichkeitstreuen Element des Bildes der Szene durchzuführen,
eine Einrichtung, um eine Aktualisierung des Kalibriermodells auf Basis der Daten vorzunehmen, die durch die Auswahl der Linien und/oder der Bezugshöhe erzeugt werden, und
ein Modul zur Modellierung von 3D-Szenen (32, 35) und/oder eine Einrichtung zur Prüfung des Erfolgs der Kalibrieroperation.

13. Werkzeug nach Anspruch 12, **dadurch gekennzeichnet, dass** das Kalibriermodul mit einer Datenbank (48) von Kalibrierprojekten zusammenarbeitet.

14. Werkzeug nach Anspruch 13, **dadurch gekennzeichnet, dass** das Modul zum Modellieren von 3D-Szenen mit einer Datenbank (48) von Überwachungsprojekten zusammenarbeitet.

15. Werkzeug nach Anspruch 14, **dadurch gekennzeichnet, dass** es ein Modul zur teleinformatischen Kommunikation (54, 55) aufweist, um mindestens eine zu kalibrierende Videoüberwachungskamera und/oder ein System zur intelligenten Videoüberwachung anzusprechen, und zwar bei einer Operation zur Konfiguration mittels einer Konfigurationsanwendung, deren Ausführung aus der Distanz und unabhängig von der übrigen, lokal ausgeführten, Anwendung zur intelligenten Videoüberwachung erfolgt.

## Claims

1. Method of configuring at least one intelligent video surveillance system based on a calibration model of at least one video surveillance camera, comprising an operation of preparing the intelligent video surveillance system, which itself comprises two successive operations i.e. a calibration operation and a modelling operation, and an operation of programming events to be detected when the intelligent video surveillance system is being used, **characterised in that** the calibration operation consists of:

■ acquiring (E1) at least one image of a scene in which a video surveillance event may occur, the acquired image being displayed on a 2D display device;
■ selecting (E2) at least one first pair of lines parallel to a direction (x) of the calibration model and at least one second pair of lines parallel to another direction (y) of the calibration model;
■ superimposing (E3) them with a planar realistic element of said image of the scene, the selecting (E2) and superimposition (E3) being effected with the aid of computer-aided design means on the 2D display device;
■ with the first and second pair of selected lines being associated with a reference plane, as a horizontal plane in at least one image of the selected image source, determining a unit dimension in a direction orthogonal to the reference plane, as a reference height relative to the horizontal plane;
■ updating the calibration model on the basis of the data produced by the selection of the lines and/or the reference height.

2. Method as claimed in claim 1, **characterised in that** a prior step of correction of the optical distortion of the camera is effected before the acquisition of the first calibration image.

3. Method as claimed in any one of claims 1 or 2, **characterised in that** it comprises a prior selection step of an image source intended to produce at least one image of said scene in which a video surveillance event may occur.

4. Method as claimed in any one of the preceding claims, **characterised in that** it comprises:

- a step of calculating the vanishing points and calculating the horizon;
- a step of calculating the focal distance of the shot;

- a step of calculating the intrinsic matrix of the camera;
- a step of estimating the extrinsic matrix of the camera at an arbitrary scale factor;
- a step of calculating the calibration matrix;
- a step of correcting the scale factor.

5. Method as claimed in any one of the preceding claims, **characterised in that** it comprises a step of selecting a calibration process selected from among:

- a calibration process based on two perpendicular groups (x, y) of pairs of parallel lines;
- a calibration process based on a cuboid; and
- a calibration process based on a grid;

so as to produce a camera calibration model.

6. Method as claimed in any one of the preceding claims, **characterised in that** a calibration test is effected to validate the calibration model determined on the basis of the preceding steps.

7. Method as claimed in claim 6, **characterised in that** it then comprises a step of representation and/or of modelling 3D scenes acquired on the basis of a two-dimensional image and of the validated calibration model.

8. Method as claimed in claim 7, **characterised in that** it consists of determining at least one surveillance zone in relation to the validated calibration model.

9. Method as claimed in the preceding claim, **characterised in that**, in order to determine at least one surveillance zone, it consists of determining a first horizontal zone, then of extending the dimension of the horizontal zone in the vertical direction determined by the validated calibration model.

10. Method as claimed in any one of claims 7 to 9, **characterised in that** it consists of associating at least one event selected from a predetermined list of events including:

-- intrusion,
-- presence,
-- passage; and
-- conditional passage,

each of the events of the predetermined list relating to an event detection module of at least one intelligent video surveillance system, with a determined surveillance zone.

11. Method as claimed in any one of the preceding claims, **characterised in that** it consists of establishing a configuration plan comprising a calibration plan drawn up on the basis of the calibration data, and, if applicable, a modelling plan drawn up on the basis of the data for specifying surveillance zones and associated events.

12. Configuration tool (30; 50) of at least one intelligent video surveillance system implementing the configuration method as claimed in at least one of the preceding claims, **characterised in that** it comprises:

■ a means (47, 33) for recording a 2D image of a real scene,
■ a calibration module (31, 36, 34) to select at least one first pair of lines parallel to a direction (x) of a calibration model and at least one second pair of lines parallel to an other direction (y) of the calibration model, **in that** the first and second pair of selected lines being associated with a reference plane, as a horizontal plane in at least one image of the selected image source, to determine a unit dimension in a direction orthogonal to the reference plane, as a reference height relative to the horizontal plane, and to superimpose a planar realistic image element of the scene,
■ a means for updating the calibration model on the basis of the data produced by the selection of the lines and/or of the reference height, and
■ a module for modelling 3D scenes (32, 35) and/or a means for testing the success of the calibration operation.

13. Tool as claimed in claim 12, **characterised in that** the calibration module cooperates with a database (48) of calibration plans.

14. Tool as claimed in claim 13, **characterised in that** the 3D scene-modelling module cooperates with a database (48) of surveillance plans.

15. Tool as claimed in claim 14, **characterised in that** it comprises a teleprocessing communication module (54, 55) to address at least one video surveillance camera to be calibrated and/or an intelligent video surveillance system during a configuration operation using a configuration application executed remotely and independently of the rest of the intelligent video surveillance application executed locally.

| Plan image 3 | ← | Caméra 2 | ← | Scène 3D 1 |

| Module calibration 4 |

| Afficheur 2D 5 | ← | Générateur lignes 6 |

**Figure 1**

R3D

z

10

y

x

16  12  13

14

20

**Figure 2**

18

Calibration 19

Sélection ligne 11

**Figure 3**

Acquérir une image — E1

↓

Sélectionner lignes — E2

↓

Superposer avec un élément — E3

↓

Mettre à jour modèle de calibration — E4

**Figure 4**

Outil de configuration 30

36

Calibration 31

33

Modelage 32

34

46

Sources 47

35

Projets 48

Application intelligente VSI 40

Analyse 42

41

43

Scènes 3D 44

Evénements 45

**Figure 5**

Configurateur
50

54

55

a b    a b        a b

| Appli #1 51 | | Appli #1 52 | | | Appli #1 53 |

■ ■ ■ ■ ■

Sélectionner/créer
Projet de calibration
E1

**Figure 6**

Sélectionner source
images
E2

Correction des
distorsions
E5

Traiter la source

E3

Saisie des lignes
parallèles
E6

Sélectionner image de
référence
E4

Calcul de calibration

E7

A

A

Placement d'un
repère de scène
E8

Sélection de zones
horizontales
E9

Sélection directions
verticales ou cube
E10

**Figure 7**

Sélection de point de
vue de scène
E11

Testage de la
calibration
E12

Sauvegarde du projet
E13

**Figure 8**

Sélectionner/Créer
projet de surveillance
E14

Sélectionner/Créer
zone de surveillance
E15

Sélectionner
événement
E16

Sauvegarde du projet
E17

**EP 2 059 903 B1**

## RÉFÉRENCES CITÉES DANS LA DESCRIPTION

### Documents brevets cités dans la description

- WO 2006022184 A
- WO 2006009192 A
- WO 2005053321 A